# EUROPEAN PATENT APPLICATION

(11) **EP 2 243 941 A2**
(43) Date of publication of application: **27.10.2010**
(21) Application number: 10160505.3
(22) Date of filing: 20.04.2010
(51) Int. Cl.: F02C 3/30

(54) **Gas turbine system using high-humidity air**

(30) Priority: 22.04.2009 JP 2009103713
(71) Applicant: Hitachi Ltd., Tokyo (JP)
(72) Inventor: Hirota, Mamoru, Tokyo 100-8220 (JP); Araki, Hidefumi, Tokyo 100-8220 (JP); Tsukamoto, Moriaki, Tokyo 100-8220 (JP); Noguchi, Yoshiki, Tokyo 100-8220 (JP)
(74) Representative: Thesen, Michael

(57) **Abstract**

A gas turbine system using high-humidity air, comprises a compressor (2) for compressing air, a humidifying tower (7) for humidifying the compressed air supplied from the compressor, arid a gas turbine (3) driven by a combustion using the compressed air humidified by the humidifying tower (7), wherein
the system further comprises a first fluidal system for collecting a thermal energy from at least one of an exhaust gas and the compressed air, a second fluidal system including a water collector (12) for collecting water content from the exhaust gas, a purifier (31,32,33) for removing an impurity from the collected water content, and a humidifying tower (7) for humidifying the compressed air with the collected and purified water content circulated in the humidifying tower, and a heat exchanger (9) between the first and second fluidal systems to heat the collected and purified water content with the collected thermal energy.

## Description

### Background of the Invention

The present invention relates to a gas turbine system using high-humidity air as combustion air to drive a gas turbine for generating an electric power, particularly a gas turbine system collecting water content from an exhaust gas so that the collected water content is reused for the high-humidity air.

It is publicly known that the water content is added into a compressed combustion air to increase an expansion in volume of the air so that an efficiency of the electric power generated by the gas turbine system is improved. High-purity water is used as the water content. For the long time period operation of the gas turbine system, a great amount of the high-purity water needs to be prepared so that an equipment and cost increase significantly. Therefore, there is the gas turbine system collecting the water content from the exhaust gas so that the collected water content is reused for the high-humidity air to be supplied to the gas turbine system.

JP-B2-4099944 discloses a gas turbine system in which water is converted to its vapor by an exhaust energy collecting boiler using the exhaust gas of the gas turbine, and the water vapor is added into the compressed combustion air to increase its humidity to be supplied to a gas turbine combustor so that an output power of the gas turbine is increased. Further, this gas turbine system includes an apparatus for collecting the water content from the exhaust gas discharged from an exhaust energy collecting boiler, and a water treatment device for purifying the water content collected from the exhaust gas to be reused as the water to be supplied to the exhaust energy collecting boiler. Since the water content collected from the exhaust gas cannot be supplied directly to the exhaust energy collecting boiler, the water treatment device includes a deaerator and an ion exchange device.

### Brief Summary of the Invention

According to the invention, a gas turbine system using air including increased humidity to drive a gas turbine, has a first fluidal system for collecting a thermal energy from an exhaust gas, and a second fluidal system for collecting water content from the exhaust gas so that the collected water content is returned to the gas turbine.

The water content collected from the exhaust gas includes NOx, Sox, CO₂ and O₂ included by the exhaust gas so that impurities such as ionized aqua fortis, ionized carbonic acid and so forth exist in the collected water content. Therefore, the gas and impurities are removed from the water content by a water purifying device such as a decarbonator, an ion exchange resin and so forth before being supplied to the gas turbine as disclosed by JP-B2-4099944. On the other hand, the collected water content and the compressed air needs to contact each other by a humidifying tower to form the high-humidity air to be supplied to the gas turbine. Therefore, the compressed air and the purified water are mixed with each other so that NOx, Sox, CO₂ and O₂ included by the compressed air are dissolved into the water.

Therefore, materials forming the second fluidal system for collecting the water content from the exhaust gas and the humidifying system for introducing the water content into the compressed air to be supplied to the gas turbine need to have corrosion resistance sufficient against the water into which the exhaust gas and the water have been dissolved.

Therefore, austenitic stainless steel is used as the materials, but the stainless steel including Cr and Ni of high concentration is expensive so that a price of the gas turbine system using the high-humidity air is significantly increased. Further, there is a provability of stress corrosion cracking of the austenitic stainless steel.

Removing oxygen, removing the impurities and adding corrosion inhibitor are effective for restraining the corrosion of the metallic material contacting the water. Since the water flowing through the fluidal system contacts directly the exhaust gas or the compressed air and the water flowing through the fluidal system is finally mixed with the compressed air, the corrosion cannot be restrained by removing the oxygen.

Since the water as well as the corrosion inhibitor are fed from the humidifying tower to a recovering heat exchanger to be evaporated, the corrosion inhibitor needs to be volatile, but there is no volatile corrosion inhibitor effective for steel of low corrosion resistance, or an extremely great amount of the volatile corrosion inhibitor will be necessary.

Therefore, the removing of the impurities is actually usable, but the removing of the impurities is not effective for steel of low corrosion resistance.

Further, since, although a great flow rate of the water content sprayed from an upper area of the humidifying tower after heated by an economizer is necessary for humidifying the compressed air, the flow rate of the water content to be sprayed is different from a flow rate of the water content suitable for the heat exchange at the economizer, the greater the flow rate of the water is, the greater a loss of driving force of feeding the water is.

An object of the invention is to provide a gas turbine system using high-humidity air to drive a gas turbine, wherein a low cost material is usable for a pipe of fluidal system.

According to the invention, a gas turbine system using high-humidity air, comprises a compressor for compressing air, a humidifying tower for humidifying the compressed air supplied from the compressor, and a gas turbine driven by a combustion using the compressed air humidified by the humidifying tower, wherein
the system further comprises a first fluidal system for collecting a thermal energy from at least one of an exhaust gas and the compressed air, a second fluidal system including a water collector for collecting water content from the exhaust gas, a purifier for removing an impurity from the collected water content, a humidifying tower for humidifying the compressed air with the collected and purified water content, and a heat exchanger between the first and second fluidal systems to heat the collected and purified water content with the collected thermal energy

Since a circulating fluid flowing through an economizer and an air cooler is prevented from contacting the air, NOx, Sox, CO₂, O₂, chloride or the like is prevented from being dissolved into the circulating fluid so that the impurity such as ionized aqua fortis, ionized carbonic acid or ionized chloride is prevented from being supplied into the humidifying tower. Therefore, the low cost material is usable for a pipe of the first fluidal system.

Other objects, features and advantages of the invention will become apparent from the following description of the embodiments of the invention taken in conjunction with the accompanying drawings.

### Brief Description of the Several Views of the Drawings

Fig. 1 is a schematic diagram showing a basic gas turbine equipment of the invention.
Fig. 2 is a schematic diagram showing a gas turbine equipment preferable for stopping operation of a humidifying tower.
Fig. 3 is a schematic diagram showing a modified circulating fluid supply tank usable in a gas turbine system of the invention.

### Detailed Description of the Invention

Hereafter, embodiments of the invention will be described with making reference to the drawings.

### (embodiment 1)

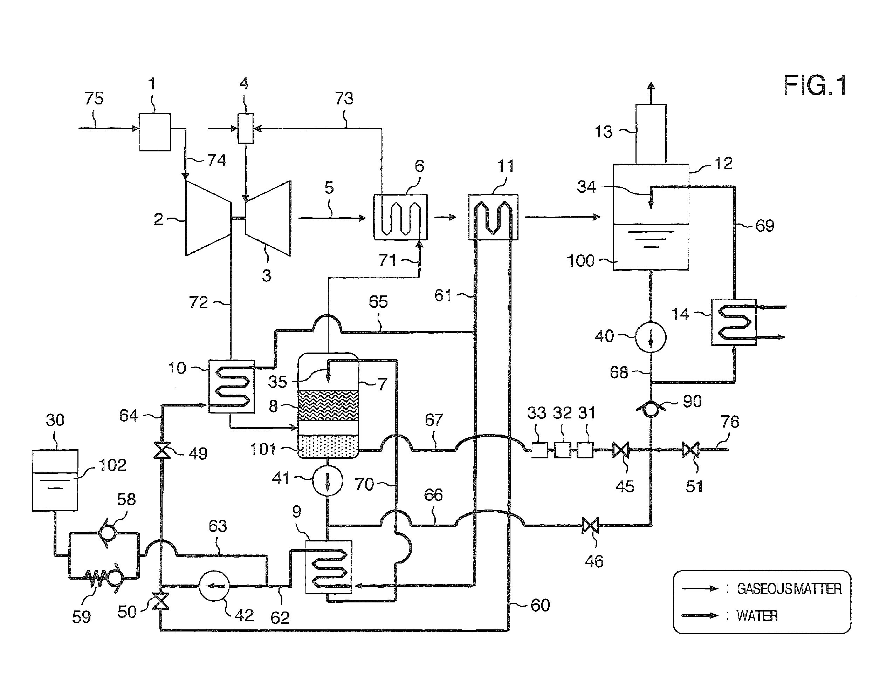

Fig. 1 is a schematic diagram showing a gas turbine system of the invention using high-humidity air, In the drawings such as FIG. 1, a circuit of gaseous matter is indicated by a thin line, and a circuit of liquid matter is indicated by a thick line.

The gas turbine system has a gas turbine 3, a filter 1 and a combustor 4 as its basic elements, and has a humidifying tower 7 as its additional basic element to form the gas turbine system using the high-humidity air. Incidentally, the gas turbine system using the high-humidity air has further elements to be described hereafter.

In the gas turbine system, the air is fed from a pipe 75 through a filter 1 and a pipe 74 to a compressor 2 to be compressed. The compressed air heated by the compression is cooled by an air cooler 10 arranged on a pipe 72 to perform a heat exchange between the compressed air and water, because it is preferable for humidifying effectively the compressed air at the humidifying tower 7 that a temperature of the compressed air is low.

The humidifying tower 7 has therein, a filler 8, an upper nozzle 35 for spraying the water, and a lower water storage portion. The compressed air supplied from the air cooler 10 is humidified by passing through the filler 8 in the humidifying tower 7, The compressed air after being humidified is fed through a pipe 71 to a recovering heat exchanger 6 to be heated, and subsequently fed to the combustor 4 to be mixed with a fuel F to be combusted with the air so that the turbine is rotated. The gas turbine system using the high-humidity air is constructed as described above.

The exhaust gas 5 is utilized as follows. Since the exhaust gas 5 of high temperature and high humidity has high thermal energy, the thermal energy of the exhaust gas is collected by the recovering heat exchanger 6 and the economizer 11 into the water or the like so that the exhaust gas is cooled, and thereafter the water content of the exhaust gas is collected by a water collector 12 while gaseous content as remainder of the exhaust gas is discharged from an exhaust flue to the atmosphere.

The fluidal system as the second fluidal system using the water content collected from the exhaust gas is described below. In the water collector 12, a collected water 100 cooled by a cooler 14 is sprayed on the exhaust gas 5 from a spray nozzle 34 to collect the water content from the exhaust gas 5. Since a basic principle for collecting the water content is that the water content in the exhaust gas is condensed by decreasing the temperature of the exhaust gas so that the condensed water content joins with the spayed water to be collected, the other method or structure for collecting the water content may be usable.

The collected water 100 is fed by a pump 40 through a pipe 68, a check valve 90 and a valve 45 to a cationic resin tower 31 to be decreased in its pH value with ion exchange, carbon dioxide is removed from the collected water by a carbon dioxide removing tower 32, and the collected water is purified by an anion resin tower 33. The collecter water after being purified is fed through a pipe 67 to the humidifying tower 7 to be added into a water 101 circulating in the humidifying tower. The water 101 circulating in the humidifying tower is fed by a pump 41 to be heated by a heat exchanger 9 and subsequently fed through a pipe 70 to be sprayed from a spray nozzle 35 onto the compressed air to be humidified.

Incidentally, the water supplied through the pipe 67 into the humidifying tower 7 is the collected water after being purified, whereby when the impurity such as NOx or the like is condensed in the water in the humidifying tower by long term circulation of the water in the humidifying tower although the impurity is removed, the valve 46 is opened to enable a part of the water fed by the pump 41 to flow through the pipe 66 into the pipe 67 to circulate through the pipes 66 and 67 so that the water is purified.

The check valve 90 prevents the circulated water from flowing from the pipe 66 into the pipe 68. The valve 46 is opened when the impurity is measured with detecting undesirable change of electric conductivity of the water 101. The pump 41 is controlled to keep the circulation flow rate constant under a predetermined load. A valve 51 is opened to enable a water is added from a pipe 76 into the water 100 when a total amount of the water 100 is decreased.

As mentioned above, the second fluidal system for the water collected from the exhaust gas has the water collector 12, the pump 40, the valve 45, the cationic resin tower 31, the carbon dioxide removing tower 32, the anion resin tower 33, the humidifying tower 7, the pump 41 and so forth.

The first fluidal system for collecting the thermal energy from the exhaust gas and so forth is described below. The circulated water supplying the thermal energy to the heat exchanger 9 is divided between two paths. In one of the paths, the water supplied from the pipe 62 and pressurized by the pump 42 is adjusted in its flow rate by the valve 50, flows through the pipe 60, and substantially is heated by the economizer 11 before returning through the pipe 61 to the heat exchanger 9. In the other one of the paths, the water supplied from the pipe 62 and pressurized by the pump 42 is adjusted in its flow rate by the valve 49, flows through the pipe 64, and substantially is heated by the air cooler 10 before returning through the pipe 65 and the pipe 61 to the heat exchanger 9.

The water circulating through the economizer 11 and the air cooler 10 absorbs the thermal energy from the exhaust gas and the compressed air with the heat exchange between the water and each of the exhaust gas and the compressed air, so that the temperature of the water increases from the normal temperature to about 200°C with increase in volume thereof. In response to the increase in volume thereof, when the pressure of the water exceeds a predetermined value, a spring check valve 59 connected to the pipe 63 releases the pressure to a circulation water stock 102 in a circulation water stock tank 30 so that the pressure is controlled. On the contrary, when the pressure is caused to become negative by decrease in volume of the water in accordance with decrease in temperature of the water, a check valve 58 connected to the pipe 63 allows the circulation water stock 102 to be supplied from the circulation water stock tank 30 into the circulating water. Opening degrees of the valves 49 and 50 are adjusted to control the temperature of the water in the first fluidal system so that the vapor pressure of the water is prevented from reaching and exceeding saturated vapor pressure.

The second fluidal system has the air cooler 10, the economizer 11, the pump 42, the valves 49 and 50, and so forth.

As described above, the second fluidal system having a provability of contaminated with the impurity and the first fluidal system for collecting the thermal energy are prevented from directly fluidly communicating with each other, and can perform the heat exchange therebetween only at the heat exchanger 9 while keeping the fluidal isolation therebetween.

Since the heat exchanger 9 is arranged to enable the first and second fluidal systems to perform the heat exchange therebetween only at the heat exchanger 9, the circulating water flowing through the economizer 11 and the air cooler 10 is prevented from contacting the air. Therefore, the pipes of the first fluidal system may be made of carbon steel or low alloy steel of low corrosion resistance of low cost.

Further, according to the invention, since the first fluidal system has first flow controller (the valves 49, 50) for controlling the flow rates in the first fluidal system so that the flow rate of the circulating water for collecting the thermal energy is adjusted, and the second fluidal system has second flow controller (the pump 41) for controlling the flow rate in the second fluidal system so that the flow rate of the water sprayed in the humidifying tower is adjusted, the humidification and the thermal energy collection can be performed efficiently in comparison with the prior art.

Further, according to the invention, the corrosion resistance of the first fluidal system against the circulating water is significantly improved, the corrosion of the low corrosion resistance material such as the carbon steel can not be prevented completely. Therefore, a corrosion inhibitor is added into the circulating water to completely prevent the corrosion of the low corrosion resistance material such as the carbon steel. Further, replacing the austenitic stainless steel used previously by the other material, the stress corrosion crack is prevented from occurring.

### (embodiment 2)

The humidifying operation of the gas turbine system of the invention is preferable under the load of 100 %, but causes an increase of instability of the combustion when the combustion for the gas turbine is started or stopped to be disturbed. Therefore, the humidifying operation of the gas turbine system needs to be prevented when the combustion for the gas turbine is started or stopped to be disturbed.

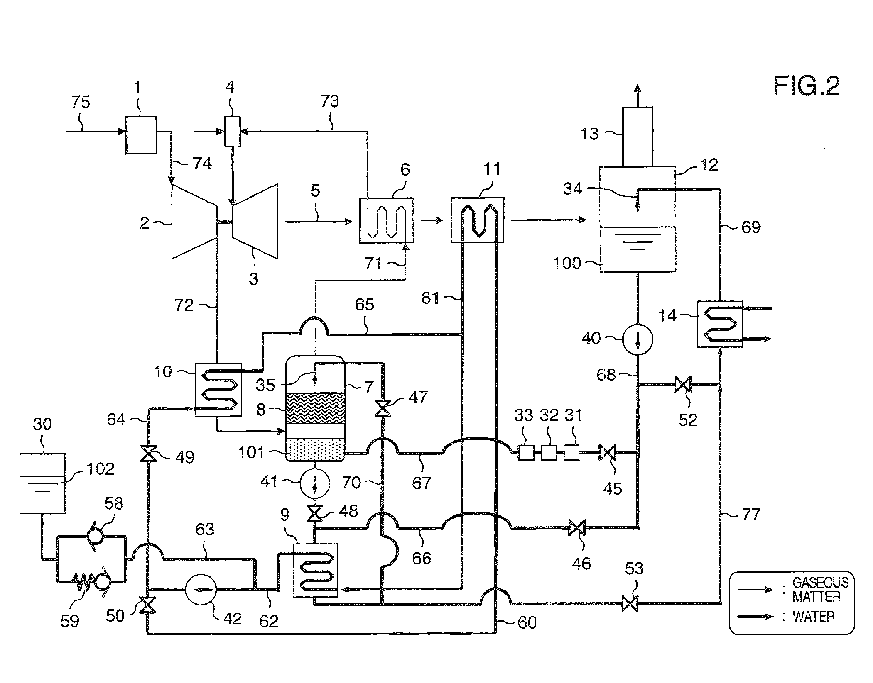

The embodiment shown in fig. 2 has a pipe 77 and valves 52 and 53 in addition to the embodiment shown in fig. 1 to enable the gas turbine system to be operated without the humidifying operation. When being operated without the humidifying operation, the valves 45, 47 and 52 are closed, the valve 46, 53 are opened, the pump 41 is stopped to prevent the water from being sprayed in the humidifying tower to stop the humidifying operation. The water continues to flow through the air cooler 10 and the economizer 11 as the normal operation to collect the thermal energy at the heat exchanger 9. The thermal energy collected by the heat exchanger 9 is absorbed by the collected water 100 driven by the pump 40 to flow through the pipes 66 and 68 to the heat exchanger 9. The collected water proceeds through the pipe 77 to the heat exchanger 14 to be cooled, and subsequently returns to the water collector through the pipe 69.

### (embodiment 3)

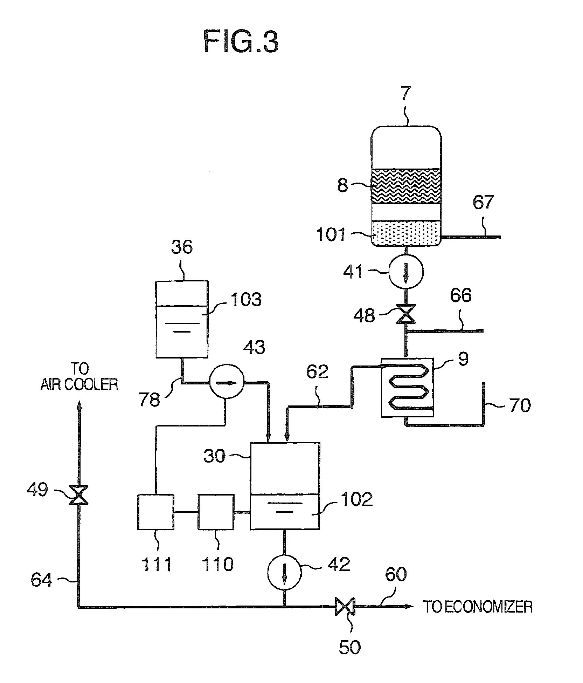

Fig. 3 shows a substitute for the circulation water stock tank 30 in the embodiment 1. The circulating water supplied through the pipe 62 from the heat exchanger 9 is temporarily stored in the circulation water stock tank 30, and subsequently fed by the pump 42 from a lower part of the circulation water stock tank 30 to the air cooler 10 or the economizer 11. A water quality monitor 110 is arranged on the circulation water stock tank 30 to always monitor the quality of the water. The water quality monitor 110 monitors a concentration of the corrosion inhibitor, and the quality of the water on the basis of the value in pH or electric conductivity of the water, so that when an amount of the corrosion inhibitor is insufficient, an agent solution injector controller 111 connected to the water quality monitor 110 output a signal to drive the pump 43 to inject a corrosion inhibitor solution 103 from a corrosion inhibitor tank 36 through a pipe 78 into the circulation water stock tank 30.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A gas turbine system using high-humidity air, comprises a compressor (2) for compressing air, a humidifying tower (7) for humidifying the compressed air supplied from the compressor (2), and a gas turbine (3) driven by a combustion using the compressed air humidified by the humidifying tower (7), wherein
the system further comprises a first fluidal system for collecting a thermal energy from at least one of an exhaust gas and the compressed air, a second fluidal system including a water collector (12) for collecting water content from the exhaust gas, a purifier (31, 32, 33) for removing an impurity from the collected water content, and a humidifying tower (7) for humidifying the compressed air with the collected and purified water content circulated through the humidifying tower (7), and a heat exchanger (9) between the first and second fluidal systems to heat the collected and purified water content with the collected thermal energy.

2. The gas turbine system according to claim 1, wherein the heat exchanger (9) is arranged to enable the collected and purified water content circulated through the humidifying tower (7) to pass through the heat exchanger (9).

3. The gas turbine system according to claim 1 or 2, wherein the first fluidal system has a first flow rate controller (49, 50) for controlling a flow rate of water circulating in the first fluidal system to absorb the thermal energy, and the second fluidal system has a second flow rate controller (41) for controlling a flow rate of the water content sprayed in the humidifying tower (7).

4. The gas turbine system according to claim 3, wherein the first flow rate controller (49, 50) controls the flow rate of water to control a temperature of the water in the first fluidal system so that the vapor pressure of the water is prevented from reaching and exceeding saturated vapor pressure in the first fluidal system.

5. The gas turbine system according to any one of claims 1-4, wherein the first fluidal system includes a liquid for absorbing therein the thermal energy, and the liquid has at least one of corrosion resistance itself and a corrosion inhibitor.

6. The gas turbine system according to any one of claims 1-5, wherein in response to one of start and stop of the gas turbine, the circulation of the water content through the humidifying tower (7) is prevented while the circulation of the water content through the water collector (12) and the heat exchanger (9) is allowed.
